Europäisches Patentamt

European Patent Office

Office européen des brevets

(19)

(11) Publication number: **0 010 937**
**B1**

(12) **EUROPEAN PATENT SPECIFICATION**

(45) Date of publication of patent specification: **24.08.83**

(21) Application number: **79302354.0**

(22) Date of filing: **26.10.79**

(51) Int. Cl.³: **B 65 B 13/26,**
**A 22 C 11/12, A 22 C 15/00**

(54) **Apparatus for knotting the mouths of flexible packagings.**

(30) Priority: **31.10.78 ES 475086**

(43) Date of publication of application:
**14.05.80 Bulletin 80/10**

(45) Publication of the grant of the patent:
**24.08.83 Bulletin 83/34**

(84) Designated Contracting States:
**AT BE CH DE FR GB IT LU NL SE**

(56) References cited:
**AT - B - 330 004**
**DE - A - 1 507 943**
**DE - B - 1 164 921**
**DE - B - 1 240 694**
**DE - B - 2 529 821**
**DE - C - 394 341**
**GB - A - 1 091 092**
**US - A - 4 022 501**

(73) Proprietor: **Barroso, Angel Lorenzo**
**Ronda Carlos III, s.n.**
**Mataro, Barcelona (ES)**

(72) Inventor: **Barroso, Angel Lorenzo**
**Ronda Carlos III, s.n.**
**Mataro, Barcelona (ES)**

(74) Representative: **Orr, William McLean et al,**
**Haseltine Lake & Co Hazlitt House 28**
**Southampton Buildings Chancery Lane**
**London WC2A 1AT (GB)**

Courier Press, Leamington Spa, England

Apparatus for knotting the mouths of flexible packagings

The present invention relates to an apparatus for knotting the mouths of flexible packagings and may be used, for example, for tying the ends of sausages.

It is known from DE—A—1 507 943 (equivalent to G.B. Patent Specification No. 1 077 784) to provide an apparatus for mechanically tying a binding around a flexible packaging, and comprising two clamps for holding the ends of an elongate loop of string in such a way that one end of the string crosses over the other end, and an arm which holds the looped end of the string so that a packaging can be laid on the string between the clamps and the arm. Thereafter, the arm is moved so as to carry the looped end over the packaging, around the crossed ends of the string and back through the loop to the starting position so as to tighten and to knot the binding around the packaging.

The known apparatus suffers from the disadvantage that an operator of the apparatus is required to carry out certain operations, after completion of the binding operation, namely to unhook the flexible packaging and its binding from the apparatus. The present invention seeks to provide an apparatus which is simplified, and which does not rely upon the attention of the operator to complete the formation of the bound packaging.

In particular, the invention provides apparatus which can operate continuously, to apply knotting to the mouths of flexible packaging, without the necessity to unhook the bound packaging from the apparatus after each operation of the apparatus.

According to the invention there is provided apparatus for knotting the mouths of flexible packagings comprising:

two clamps (31, 32) for holding the ends of an elongate loop of string (2) in such a way that one end of the string crosses over the other end;

a moveable arm (12) for holding at an operating end thereof (15) a looped end (6) of the string, the arm being moveable along a path from a first position in which a flexible packaging (49) can be laid on the string between the crossed ends (3) of the string and the looped end (6) of the string to a second position in which the looped end (6) is carried over the flexible packaging and around the crossed ends (3) of the string, and back to the first position to tighten and to knot the string around the flexible packaging (49);

a moveable jaw (17) and a fixed jaw (16) provided at the operating end (15) of the moveable arm (12), the arrangement being such that the moveable jaw (17) engages with the looped end (6) of the string in the first position of the arm (12) and carries the looped end (6) to the crossed ends (3) of the string, and the fixed jaw (16) receives the looped end (6) from the moveable jaw (17) in the second position of the arm (12) and carries the looped end (6) as the arm moves back to its first position;

characterised in that spring biasing (19) urges the moveable jaw (17) away from the fixed jaw (16) in the first position of the arm (12); and a guide surface (35) is provided which can be arranged along said path of movement of the arm (12) to engage with the moveable jaw (17) and to move the latter against the spring biasing (19) towards the fixed jaw (16) so that, in the second position of the arms (12), the looped end (6) is simultaneously transferred from the moveable jaw (17) to the fixed jaw (16) and is taken around the crossed ends (3) of the sring;

and in that the arm (12) is hollow and a moveable bar (22) is slidably mounted in the arm (12) to co-operate with the fixed jaw (16), the bar (22) being moveable from a release position in which the looped end is transferred from the moveable jaw (17) to the fixed jaw (16), in the second position of the arm (12), to a holding position in which the looped end (6) is held by the fixed jaw as the arm moves back from the second position to the first position.

For a better understanding of the present invention and to show more clearly how it may be carried into effect reference will now be made, by way of example, to the accompanying drawings in which:—

Figure 1 is an elevational view of part of a roll of paper carrying string for the knotting;

Figure 2 is a sectional view, on a considerably enlarged scale, along the line II—II of Figure 1;

Figure 3 is an elevational view, partly in section, of a moveable arm of the apparatus;

Figure 4 is a sectional view along the line IV—IV of Figure 3;

Figure 5 is a view taken along the line V—V shown in Figure 3;

Figure 6 is a detailed elevational view of jaws provided on the moveable arm;

Figure 7 is a perspective view of the apparatus;

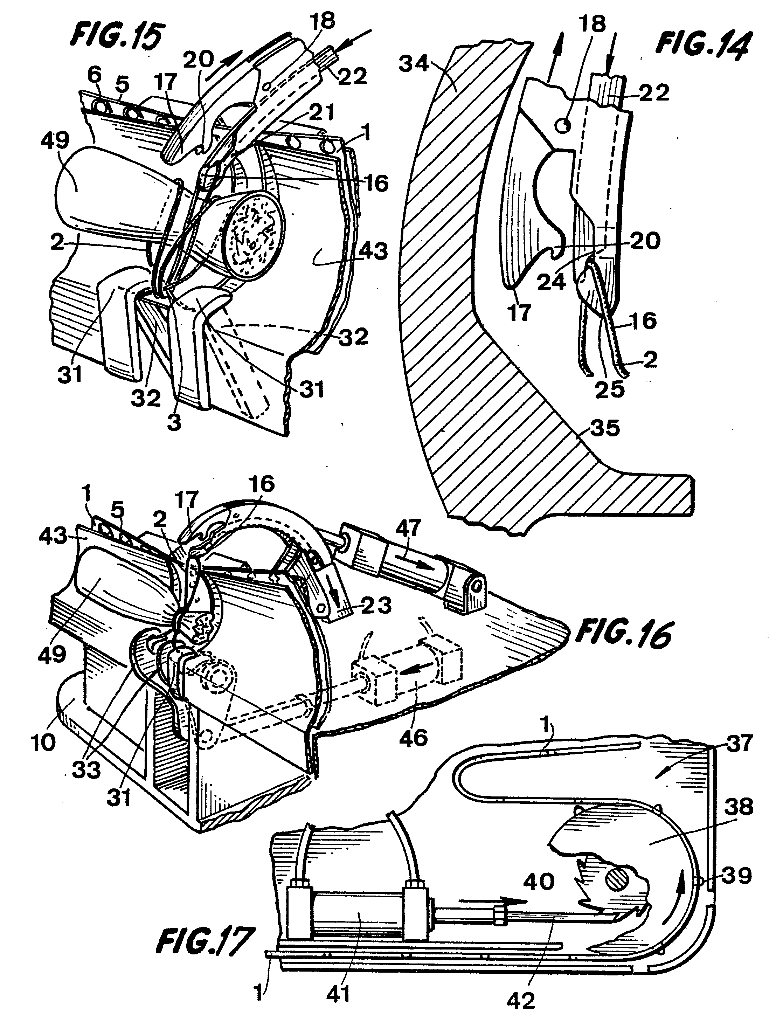

Figures 8 to 16 are various views of the apparatus during the different stages of tying a knot, parts of the apparatus being omitted for clarity; and

Figure 17 is a plan view showing a mechanism for advancing the roll of paper.

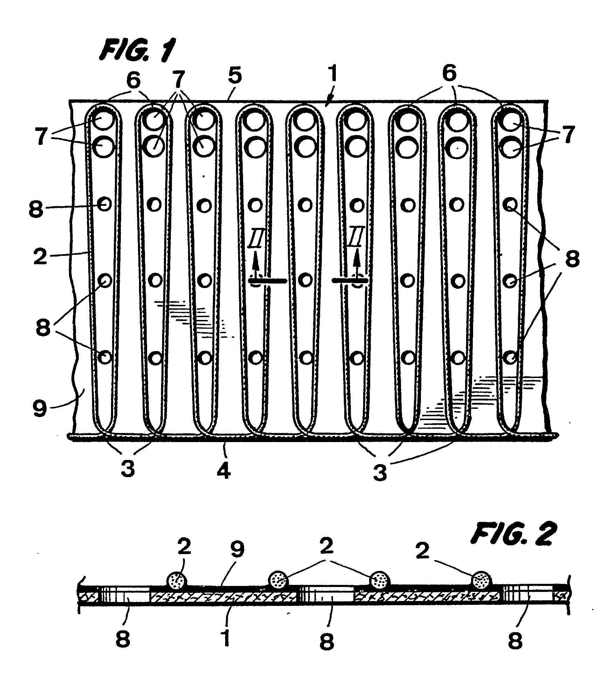

As can be seen from Figures 1 and 2 of the drawings, a string 2 is incorporated into a roll composed of a band 1 of paper, on one face of which the continuous string 2 is arranged in a plurality of adjacent elongate loops. The points 3 where the string crosses over itself are adjacent to one of the edges 4 of the band 1, and the parts 6 of the loops opposite the points 3 are arranged substantially tangential to the other edge 5 of the band 1. Inside each loop, two holes 7 are cut so as to be aligned transversely of the band and positioned close to the edge 5. Three other holes 8, which are spaced apart from one another transversely across the band 1, are provided for advancing the band, the holes 8 being smaller than the holes 7. The face of the band 1 which supports the string 2 is provided with a coating 9 of thermoplastics material, onto which the string 2 is adhered by heating the plastics material.

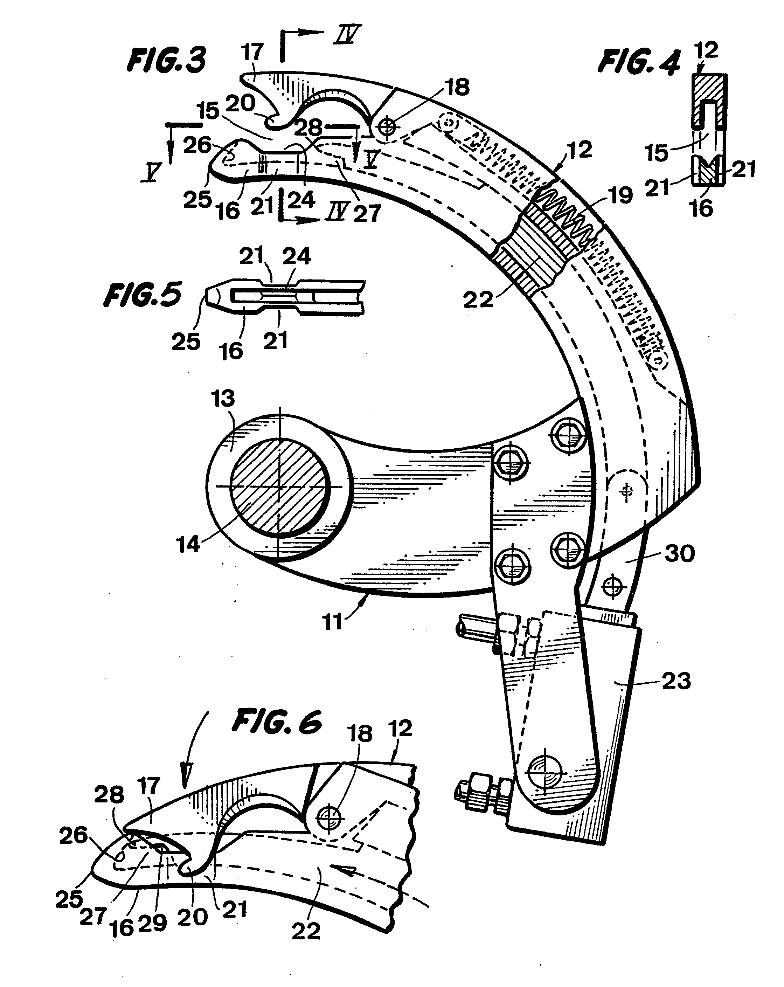

The knotting is effected by an apparatus as shown in Figures 3 to 7, the apparatus comprising a frame 10 on which there is mounted a moveable arm 12 for carrying the string; two pairs of clamps 31, 32 for holding the ends of the string 2; two cutters 33 for cutting the string 2; a lower locking member 34, provided with an inclined portion 35 which co-operates with the moveable arm 12; a compartment 36 containing a roll of unused paper; a compartment 37 containing used paper, i.e. paper from which the string has been removed; an advancing mechanism for the roll of paper; a curved positioning member 43 for the paper band; and an operating mechanism 44.

The moveable arm 12 is mounted at an angle on a further arm 11. The arm 11 is provided with a sleeve 13 and is mounted on a rotatable shaft 14, which shaft, on actuating the operating mechanism 44, rotates in each work cycle through an angle of from 90° to 100° and then returns to its initial rest position.

The moveable arm 12 is arcuate and extends over an arc of approximately 90°. At its free end, the arm 12 is provided with a mouth 15 consisting of a fixed lower jaw 16 and a moveable upper jaw 17 articulated at a point 18 at the rear of the mouth 15. The upper jaw 17 is biased towards its open position by means of a spring 19 which acts on the rear of the jaw 17.

The moveable upper jaw 17 closes against the lower jaw 16 when the free end of the upper jaw contacts the inclined portion 35 of the lower locking member 34 when the shaft 14 rotates. The upper jaw 17 is provided with a pair of forwardly extending hooks 20 which extend from the lower surface of the jaw 17 for carrying the string 2 around a sausage or the like 49.

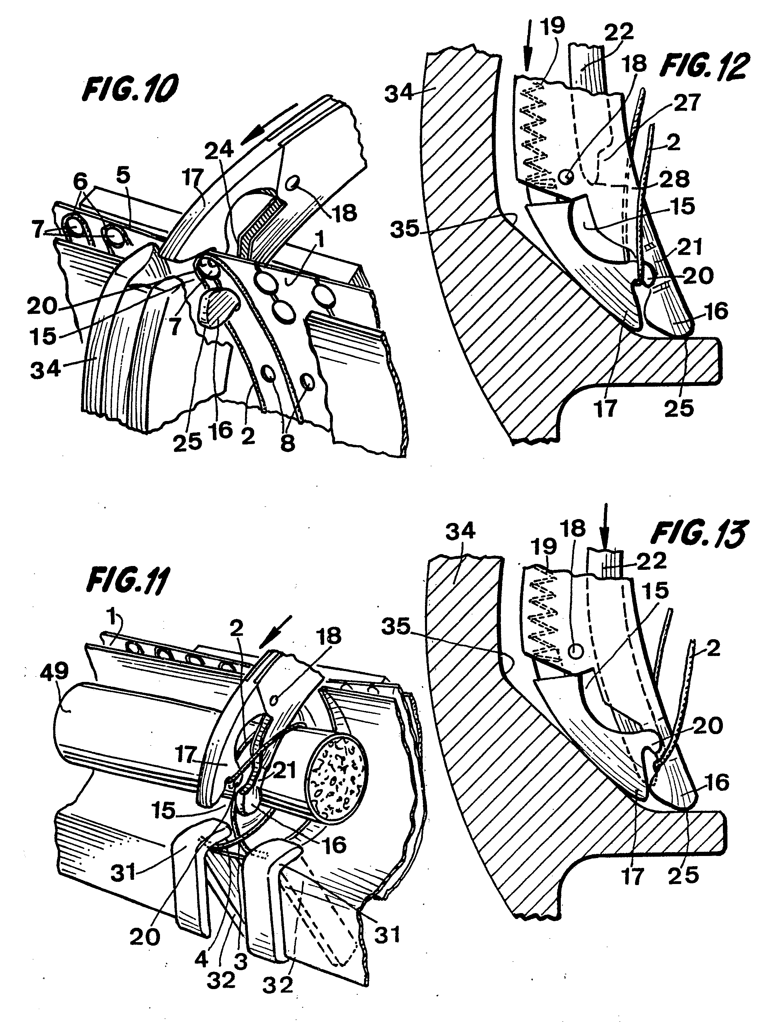

The paper band is so arranged that when the shaft rotates, the front end 25 of lower jaw 16 passes through the lower hole of the pair of holes 7, while the hooks 20 of the upper jaw pass through the upper hole of the pair of holes 7. The end of the upper jaw 17 passes above the upper edge 5 of the paper band 1 (see Figure 10). When the upper jaw 17 closes on the lower jaw 16 (see Figure 12), the two hooks 20 engage with a lateral depression 21 formed on each side of the lower jaw. This carries the string 2 to a position close to, or bearing against, the lower jaw 16.

The moveable arm 12 is hollow and mounted within the arm 12 is an arcuate bar 22 which projects from the joint between the arms 11 and 12 and which is moveable backwards and forwards under the control of a driving member 23 via a further arcuate bar 30. The lower jaw 16 has a groove along the inner surface thereof and is provided with a recess 24 in the region of the lateral depressions 21. In addition, at the front end 25 of the lower jaw 16 there is provided a depression 26. The arcuate bar 22 has a cut-away portion 27 at the lower surface of the end thereof so as to form a protruding end 28 which is engageable with the depression 26 (see Figures 6 and 13). A small through-hole 29 remains between the lower surface of the arcuate bar 22 and the upper surface of the lower jaw 16 so that when the arcuate bar 22 is in its forward position the string 2 is securely held in the through-hole 29. The driving member for the arcuate bar 22 is a pneumatic cylinder and piston assembly.

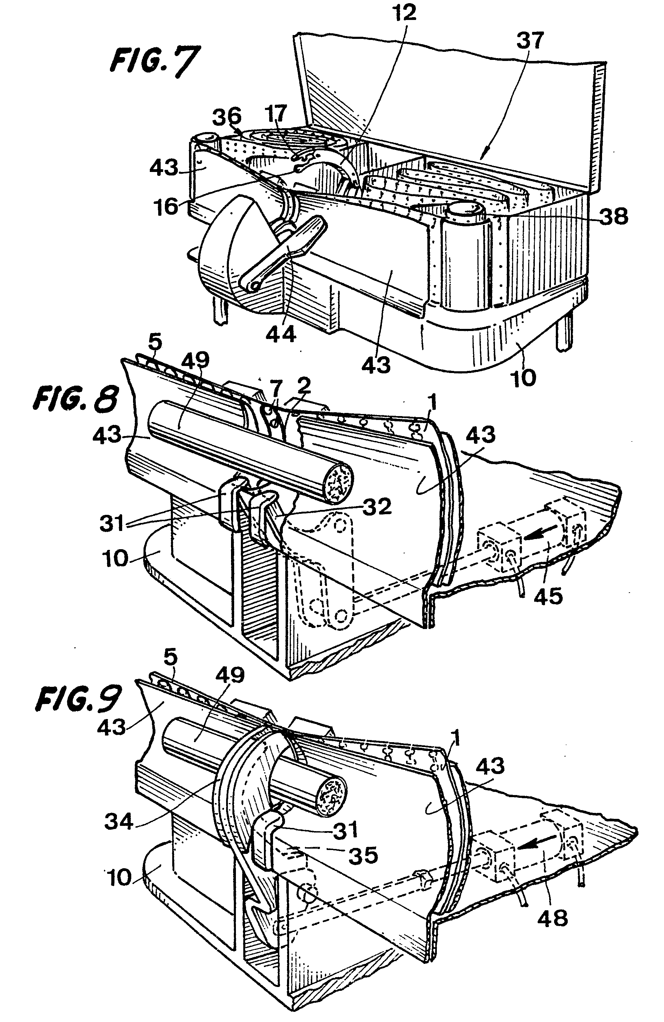

Each pair of clamps 31, 32 for the string 2 consists of a stationary upper member 31 and a moveable lower member 32 (see Figures 8, 11 and 15), the lower member 32 being operated by means of a pneumatic piston and cylinder assembly 45. The cutters 33 for the string are arranged in a vertical plane and operate by shearing the string in co-operation with an adjacent vertical surface of one of the clamps 31. The cutters 33 are operated by a common driving member in the form of a pneumatic piston and cylinder assembly 46 (see Figure 16). The rotatable shaft 14 is driven by means of a pneumatic piston and cylinder assembly 47 (see Figure 16), and the lower locking member 34 is operating by means of a pneumatic piston and cylinder assembly 48.

The means for advancing the paper band after each knot has been tied is shown in Figure 17 and comprises a roller 38 provided with projections 39 for engaging with the holes 8. The roller 38 is coupled with a toothed wheel 40 which is rotated intermittently through a predetermined number of degrees by means of a rod 42 operated by a pneumatic piston and cylinder assembly 41.

The apparatus operates as follows. A roll of paper having string adhered thereto is inserted in the compartment 36 and is passed through the positioning member 43, which is curved, to the roller 38. With a loop of string in an operating position and with a flexible packaging, such as a sausage, in position adjacent to the loop of string, the operating mechanism 44 is actuated and this causes the pneumatic piston and cylinder assembly 45 to operate the clamps 31, 32 to hold the ends of the string adjacent to the cross-over point 3. Simultaneously, the piston and cylinder assembly 47 is operated to rotate the shaft 14 and the piston and cylinder assembly 48 is operated to cause the locking member 34 to encircle the exposed front surface of the sausage 49. The moveable arm 12 engages the upper part of the string 2, separating it from the paper band 1 (see Figure 10), and carries the string around the sausage to the cross-over point 3 (see Figure 11). When the cross-over point 3 enters the mouth 15 of the arm 12, the moveable jaw 17 engages with the inclined portion 35 of the locking member 34 so as to close the jaws. This transfers the string 2 from the upper jaw to the lower jaw and when the arcuate bar 22 is moved to its forward position the string is securely held in the through-hole 29. This is shown in Figures 12 and 13, where the string which forms the cross-over point 3 has been omitted for clarity, although it must be pointed out that the string forming the cross-over point remains inside the mouth 15. With the string securely held within the through-hole 29, the moveable arm 12 is returned towards its original position, thus allowing the jaw 17 to open, and the string is drawn through the loop and is pulled tight due to the retraction of the arm 12 until it reaches the position shown in Figure 16, where the knot is complete.

At this stage, the cutters 33 are operated by the piston and cylinder assembly 46 to cut the string and the piston and cylinder assembly 41 is operated so as to advance the paper band in order to bring a fresh loop of string into the operating position.

It must be pointed out that the apparatus can be provided with a device for cutting the sausage and with a positioning device for regulating the length of the sausage, although these two devices are not shown.

## Claims

1. Apparatus for knotting the mouths of flexible packagings comprising:
two clamps (31, 32) for holding the ends of an elongate loop of string (2) in such a way that one end of the string crosses over the other end;
a moveable arm (12) for holding at an operating end thereof (15) a looped end (6) of the string, the arm being moveable along a path from a first position in which a flexible packaging (49) can be laid on the string between the crossed ends (3) of the string and the looped end (6) of the string to a second position in which the looped end (6) is carried over the flexible packaging and around the crossed ends (3) of the string, and back to the first position to tighten and to knot the string around the flexible packaging (49);
a moveable jaw (17) and a fixed jaw (16) provided at the operating end (15) of the moveable arm (12), the arrangement being such that the moveable jaw (17) engages with the looped end (6) of the string in the first position of the arm (12) and carries the looped end (6) to the crossed ends (3) of the string, and the fixed jaw (16) receives the looped end (6) from the moveable jaw (17) in the second position of the arm (12) and carries the looped end (6) as the arm moves back to its first position;
characterised in that spring biasing (19) urges the moveable jaw (17) away from the fixed jaw (16) in the first position of the arm (12); and a guide surface (35) is provided which can be arranged along said path of movement of the arm (12) to engage with the moveable jaw (17) and to move the latter against the spring biasing (19) towards the fixed jaw (16) so that, in the second position of the arm (12), the looped end (6) is simultaneously transferred from the moveable jaw (17) to the fixed jaw (16) and is taken around the crossed ends (3) of the string;
and in that the arm (12) is hollow and a moveable bar (22) is slidably mounted in the arm (12) to co-operate with the fixed jaw (16), the bar (22) being moveable from a release position in which the looped end is transferred from the moveable jaw (17) to the fixed jaw (16), in the second position of the arm (12), to a holding position in which the looped end (6) is held by the fixed jaw as the arm moves back from the second position to the first position.

2. Apparatus according to claim 1, characterised in that the guide surface (35) is provided on a locking member (34) which is moveable to a position in which it faces the surface of a flexible packaging (49) which is opposite to the surface which is laid initially on the string.

3. Apparatus according to claim 1 and 2, characterised in that the operating end (15) of the arm (12) is moveable along an arcuate path between said first and second positions.

4. Apparatus according to claim 3, characterised in that the arm (12) and the moveable bar (22) are arcuate, the arm (12) being mounted on a shaft which is rotatable in order to move the operating end (15) of the arm through an arc of about 90° to 100° between said first and second positions.

5. Apparatus according to claim 4, characterised in that the fixed jaw (16) is formed with a depression (26) and the arcuate bar (22) is formed with a cut-away portion (27) so as to provide a protruding end (28), the protruding end (28) co-operating with the depression (26) so as to hold the string securely in a through-hole (29) between the bar (22) and the fixed jaw (16) in the holding position of the bar (22).

6. Apparatus according to any one of the preceding claims, characterised in that the moveable jaw (17) is provided with two forwardly projecting hooks (20) and in that the fixed jaw (16) is formed with lateral depressions (21) on each side of the jaw for accommodating the hook one on either side of the fixed jaw.

7. Apparatus according to any one of the preceding claims, characterised in that two cutters (33) are arranged to co-operate one each with a respective clamp (31), in order to cut the crossed ends (3) of the string after the flexible packaging has been knotted.

8. Apparatus according to any one of the preceding claims, characterised in that the string (2) is mounted on a roll of paper (1), the string being arranged in a plurality of adjacent elongate loops, the crossed ends (3) of each loop being arranged adjacent to one edge of the roll and the looped end (6) of each loop being arranged adjacent to the other edge of the roll.

9. Apparatus according to claim 8, characterised in that the roll of paper has a coating of thermoplastics material on one face thereof, the string being adhered to the paper by melting the plastics material.

**Patentansprüche**

1. Vorrichtung zum Verknoten der Stirnenden von flexiblen Verpackungen mit zwei Klammern (31, 32) zum Halten der Enden einer langgestreckten Bandschleife (2) derart, daß ein Ende des Bandes das andere überkreuzt, mit einem beweglichen Arm (12), der an einem Arbeitsende (15) ein zu einer Schleife gelegtes Ende (6) des Bandes hält, wobei der Arm entlang einem Weg von einer ersten Position, in welcher eine flexible Verpackung (49) zwischen den sich kreuzenden Enden (3) des Bandes und dem zu einer Schleife gelegten Ende (6) des Bandes auf das Band gelegt werden kann, zu einer zweiten Position bewegbar ist, in welcher das zu einer Schleife gelegte Ende (6) über die flexible Verpackung und um die sich kreuzenden Enden (3) des Bandes mitgenommen worden ist, und zurück in die erste Position bewegbar ist, um das Band um die flexible Verpackung herum zusammenzuziehen und zu verknoten, und mit einer beweglichen Klaue (17) und einer festen Klaue (16) des beweglichen Armes (12) die so angeordnet sind, daß die bewegliche Klaue (17) das zu einer Schleife gelegte Ende (6) des Bandes in der ersten Position des Armes (12) ergreift und dieses Ende (6) zu den sich kreuzenden Enden (3) des Bandes mitnimmt, und die feste Klaue (16) das zu einer Schleife gelegte Ende (6) von der beweglichen Klaue (17) in der zweiten Position des Armes (12) erhält und das zu einer Schleife gelegte Ende (6) mitnimmt, wenn sich der Arm in seine erste Position zurückbewegt, dadurch gekennzeichnet, daß in der ersten Position des Armes (12) eine Federvorspannung (19) die bewegliche Klaue (17) von der festen Klaue (16) wegdrängt, daß eine Führungsfläche (35) vorgesehen ist, die entlang dem Bewegungsweg des Armes (12) angeordnet sein kann, um die bewegliche Klaue (17) anzugreifen und sie gegen die Federvorspannung (19) in Richtung auf die feste Klaue (16) zu bewegen, so daß in der zweiten Position des Armes (12) das zu einer Schleife gelegte Ende (6) gleichzeitig von der beweglichen Klaue (17) zur festen Klaue (16) übertragen und um die sich überkreuzenden Enden (3) des Bandes herumgewunden wird, und daß der Arm (12) hohl ist und in dem Arm (12) eine bewegbare Stange (22) verschiebbar gelagert ist, welche mit der festen Klaue zusammenwirkt, wobei die Stange (22) aus einer Löseposition, in welcher das zu einer Schleife gelegte Ende in der zweiten Position des Armes (12) von der beweglichen Klaue (17) zur festen Klaue (16) übertragen wird, in eine Halteposition übertragen wird, in welcher das zu einer Schleife gelegte Ende (6) durch die feste Klaue gehalten wird, wenn sich der Arm aus der zweiten Position zurück in die erste Position bewegt.

2. Vorrichtung nach Anspruch 1, dadurch gekennzeichnet, daß die Führungsfläche (35) auf einem Riegelelement (34) vorgesehen ist, das in eine Position bewegbar ist, in welcher es der Oberfläche einer flexiblen Verpackung (49) zugewandt ist, die der Oberfläche gegenüberliegt, die anfangs auf das Band gelegt worden ist.

3. Vorrichtung nach Anspruch 1 und 2, dadurch gekennzeichnet, daß das Arbeitsende (15) des Armes (12) zwischen der ersten Position und der zweiten Position entlang einem gekrümmten Weg bewegbar ist.

4. Vorrichtung nach Anspruch 3, dadurch gekennzeichnet, daß der Arm (12) und die bewegbare Stange (22) gekrümmt sind und daß der Arm (12) auf einer drehbaren Welle montiert ist, um das Arbeitsende (15) des Armes zwischen der ersten Position und der zweiten Position durch einen Bogen von 90 bis 100° zu bewegen.

5. Vorrichtung nach Anspruch 4, dadurch gekennzeichnet, daß die feste Klaue (16) mit einer Vertiefung (26) versehen ist und daß die gekrümmte Stange (22) mit einem Ausschnitt (27) versehen ist, so daß ein vorspringendes Ende (28) gebildet ist, daß mit der Vertiefung (26) zusammenwirkt, um in der Halteposition der Stange (22) das Band sicher in einem Durchgangsloch (29) zwischen der Stange (22) und der festen Klaue (16) zu halten.

6. Vorrichtung nach einem der vorhergehenden Ansprüche, dadurch gekennzeichnet, daß die bewegliche Klaue (17) mit zwei nach vorn vorspringenden Haken (20) versehen ist und daß die feste Klaue (16) mit seitlichen Vertiefungen (21) auf jeder Seite der Klaue ausgebildet ist, um auf jeder Zeite der festen Klaue einen Haken aufzunehmen.

7. Vorrichtung nach einem der vorhergehenden Ansprüche, dadurch gekennzeichnet, daß zwei Schneidvorrichtungen (33) vorgesehen sind, von denen je eine mit einer zugehörigen Klammer arbeitet, um die sich kreuzenden Enden (6) des Bandes abzuschneiden, nachdem die flexible Verpackung verknotet worden ist.

8. Vorrichtung nach einem der vorhergehenden Ansprüche, dadurch gekennzeichnet, daß das Band (2) auf einer Papierrolle (1) montiert ist, daß das Band in mehreren benachbarten, langgestreckten Schleifen angeordnet ist, wobei die sich kreuzenden Enden (3) jeder Schleife neben einer Kante der Rolle angeordnet sind und das zu einer Schleife gelegte Ende (6) jeder Schleife neben der anderen Kante der Rolle angeordnet ist.

9. Vorrichtung nach Anspruch 8, dadurch gekennzeichnet, daß die Papierrolle auf einer Seite eine Beschichtung aus thermoplastischem Material besitzt, wobei das Band durch Schmelzen des Kunststoffmaterials an dem Papier haftet.

Revendications

1. Appareil pour nouer les ouvertures d'emballages souples, comprenant:

deux pinces (31, 32) pour maintenir les extrémités d'une boucle allongée de ficelle (2), de manière qu'une extrémité de la ficelle se croise avec l'autre extrémité en passant par dessus celle-ci;

un bras mobile (12) pour maintenir à une extrémité fonctionnelle (15) de ce bras, une extrémité bouclée (6) de la ficelle, le bras étant mobile le long d'une trajectoire à partir d'une première position dans laquelle un emballage souple (49) peut être posé sur la ficelle, entre les extrémités croisées (3) de la ficelle et l'extrémité bouclée (6) de la ficelle, vers une deuxième position dans laquelle l'extrémité bouclée (6) est transportée par dessus l'emballage souple et autour des extrémités croisées (3) de la ficelle, et en retour, vers la première position afin de serrer et de nouer la ficelle autour de l'emballage souple (49);

une mâchoire mobile (17) et une mâchoire fixe (16) prévues à l'extrémité fonctionnelle (15) du bras mobile (12), la disposition étant agencée de façon que la mâchoire mobile (17) s'engage avec l'extrémité bouclée (6) de la ficelle dans la première position du bras (12) et transporte l'extrémité bouclée (6) vers les extrémités croisées (3) de la ficelle, et que la mâchoire (16) reçoive l'extrémité bouclée (6) à partir de la mâchoire mobile (17) dans la deuxième position du bras (12) et entraîne l'extrémité bouclée (6) au fur et à mesure que le bras revient sur sa première position;

ledit appareil étant caractérisé par le fait qu'un asservissement élastique (19) repousse la mâchoire mobile (17) de la mâchoire fixe (16) dans la première position du bras (12), et qu'il est prévu une surface de guidage (35) pouvant être disposée le long de ladite trajectoire de mouvement du bras (12), de manière à s'engager avec la mâchoire mobile (17) et à faire déplacer cette dernière, en surmontant l'asservissement élastique (19), vers la mâchoire fixe (16) afin que, dans la deuxième position du bras (12), l'extrémité bouclée (6) soit simultanément transférée de la mâchoire mobile (17) à la mâchoire fixe (16) et entraînée autour des extrémités croisées (3) de la ficelle, ledit appareil étant également caractérisé par le fait que le bras (12) est creux et qu'une barre mobile (22) est montée coulissante dans le bras (12) pour collaborer avec la mâchoire fixe (16), la barre (22) étant mobile pour passer d'une position de dégagement dans laquelle l'extrémité bouclée est transférée de la mâchoire mobile (17) à la mâchoire fixe (16), dans la deuxième position du bras (12), à une position de maintien dans laquelle l'extrémité bouclée (6) est maintenue par la mâchoire fixe lorsque le bras revient de la deuxième position à la première position.

2. Appareil selon la revendication 1, caractérisé par le fait que la surface de guidage (35) est prévue sur un élément de verrouillage (34) qui est mobile vers une position dans laquelle il fait face à la surface d'un emballage souple (49) se trouvant en regard de la surface posée initialement sur la ficelle.

3. Appareil selon les revendications 1 et 2, caractérisé par le fait que l'extrémité fonctionnelle (15) du bras (12) est mobile le long d'une trajectoire arquée entre lesdites première et deuxième positions.

4. Appareil selon la revendication 3, caractérisé par le fait que le bras (12) et la barre mobile (22) sont arqués, le bras (12) étant monté sur un arbre qui est révolutif, de manière à déplacer l'extrémité fonctionnelle (15) du bras sur un arc de 90 à 100° environ entre lesdites première et deuxième positions.

5. Appareil selon la revendication 4, caractérisé par le fait que la mâchoire fixe (16) est formée avec une dépression (26) et que la barre arquée (22) est formée avec une partie échancrée (27) de façon à présenter une extrémité en saillie (28), l'extrémité en saillie (28) collaborant avec la dépression (26), de manière à maintenir solidement la ficelle dans un trou traversant (29) entre la barre (22) et la mâchoire fixe (16) dans la position de maintien de la barre (22).

6. Appareil selon l'une quelconque des revendications précédentes, caractérisé par le fait que le mâchoire mobile (17) est pourvue de deux crochets faisant saillie en direction de l'avant (20) et que la mâchoire fixe (16) est formée avec des dépressions latérales (21) de chaque côté de la mâchoire, afin de recevoir les crochets à raison d'un de chaque côté de la mâchoire fixe.

7. Appareil selon l'une quelconque des revendications précédentes, caractérisé par le fait que deux outils de coupe (33) sont disposés de façon collaborer chacun avec une pince respective (31), afin de couper les extrémités croisées (3) de la ficelle, après le nouage de l'emballage souple.

8. Appareil selon l'une quelconque des revendications précédentes, caractérisé par le fait que la ficelle (2) est montée sur un rouleau de papier (1), la ficelle étant disposée dans une pluralité de boucles allongées adjacentes, les extrémités croisées (3) de chaque boucle étant disposées adjacentes à un bord du rouleau, et l'extrémité bouclée (6) de chaque boucle étant disposée adjacente à l'autre bord du rouleau.

9. Appareil selon la revendication 8, caractérisé par le fait que le rouleau de papier comporte sur une face un revêtement en matière thermoplastique, la ficelle adhérant au papier par fusion de la matière plastique.

FIG. 1

FIG. 2

0010937

FIG.3

FIG.4

FIG.5

FIG.6

FIG. 7

FIG. 8

FIG. 9

FIG.10

FIG.11

FIG.12

FIG.13

0 010 937

FIG.15

FIG.14

FIG.16

FIG.17

5